# EUROPEAN PATENT APPLICATION

(11) **EP 4 803 770 A1**
(43) Date of publication of application: **09.09.2026**
(21) Application number: 23957642.4
(22) Date of filing: 01.11.2023
(51) Int. Cl.: F16D 43/02, F16D 63/00

(54) **ROTATION TRANSMISSION DEVICE**

(71) Applicant: JTEKT CORPORATION, Kariya-shi, Aichi 448-8652 (JP)
(72) Inventor: WATANABE, Kentaro, Kariya-shi, Aichi 448-8652 (JP); AOTA, Kenichi, Kariya-shi, Aichi 448-8652 (JP); SUZUKI, Yoshiharu, Kariya-shi, Aichi 448-8652 (JP)
(74) Representative: Winter, Brandl - Partnerschaft mbB
(86) International application number: PCT/JP2023/039451
(87) International publication number: WO 2025/094314

(57) **Abstract**

The rotation transmission device (100) includes an input member (110), an intermediate member (120), an output member (130), a first biasing member (210), a cam mechanism (300), and a housing (101). The first biasing member (210) connects the intermediate member (120) and the output member (130) and biases the intermediate member (120) toward the input member (110). The intermediate member (120) includes an intermediate main body (121), a rotating friction portion (125), and a second biasing member (220). The rotating friction portion (125) is disposed at a position facing a fixed friction surface (109). The second biasing member (220) connects the intermediate main body (121) and the rotating friction portion (125) and biases the rotating friction portion (125) toward the fixed friction surface (109). The spring constant of the first biasing member (210) is greater than the spring constant of the second biasing member (220).

## Description

### TECHNICAL FIELD

The present invention relates to rotation transmission devices.

### BACKGROUND ART

Conventionally, there is a device that transmits a rotational force applied from a driving source such as a motor to a predetermined object and that is configured to cut off input of a rotational force (torque) transmitted from the object toward the driving source (reverse input).

For example, Patent Document 1 discloses a power transmission mechanism used in a drive device provided in an automobile. In this power transmission mechanism, when an input-side member rotates upon receiving input rotational power from a driving source, part of the input rotational power is converted into an axial force by fitting engagement between a substantially V-shaped recessed cam and a protruding cam, and an intermediate member is axially displaced toward the output side against a spring. Then, due to the axial displacement of the intermediate member toward the output side, a friction clutch is released and the intermediate member becomes rotatable relative to a stationary member. On the other hand, when the driving source stops, the intermediate member is axially displaced toward the input side by a pressing biasing force of the spring, the friction clutch operates, and the intermediate member is restrained in the rotational direction relative to the stationary member.

### Related Art Documents

### Patent Documents

Patent Document 1: Japanese Unexamined Patent Application Publication No. 2000-346099 (JP 2000-346099 A)

### SUMMARY OF THE INVENTION

### Problem to be Solved by the Invention

In the conventional power transmission mechanism described above, the intermediate member has a slide spline hole on its inner periphery, and is mounted to an output-side member so as to be non-rotatable and axially movable relative to the output-side member by fitting the slide spline hole to a slide spline formed on the outer periphery of the output-side member. Accordingly, when the intermediate member moves axially relative to the output-side member, friction necessarily occurs between the intermediate member and the output-side member. This can cause a reduction in torque transmission efficiency.

The present invention has been made by the present inventors newly focusing on the above issue, and an object of the present invention is to provide a rotation transmission device capable of suppressing a reduction in torque transmission efficiency.

### Means for Solving the Problem

A rotation transmission device according to one aspect of the present invention includes: an input member configured to rotate about a central axis extending in a first direction by torque input from a driving source; an intermediate member disposed coaxially with the input member on one side of the input member in the first direction; an output member disposed coaxially with the input member and the intermediate member on one side of the intermediate member in the first direction; a first biasing member connecting the intermediate member and the output member and configured to bias the intermediate member toward the input member; a cam mechanism disposed between the input member and the intermediate member and configured to transmit rotation of the input member to the intermediate member; and a housing that houses the intermediate member and the cam mechanism, rotatably holds the input member and the output member, and includes a fixed friction surface. The intermediate member includes: an intermediate main body disposed at a position through which the central axis passes, the first biasing member being fixed to the intermediate main body; a rotating friction portion disposed at a position facing the fixed friction surface in the first direction; and a second biasing member connecting the intermediate main body and the rotating friction portion and configured to bias the rotating friction portion toward the fixed friction surface. The spring constant of the first biasing member is greater than the spring constant of the second biasing member. The cam mechanism is configured to, when the input member rotates, move the intermediate main body in a direction toward the output member while maintaining a state in which rotation of the input member is transmitted to the intermediate main body, so as to move the rotating friction portion in a direction away from the fixed friction surface via the second biasing member.

### Effects of the Invention

The rotation transmission device according to the present invention can suppress a reduction in torque transmission efficiency.

### BRIEF DESCRIPTION OF THE DRAWINGS

[FIG. 1] FIG. 1 is a schematic diagram showing an overview of the configuration of a steering system according to an embodiment and its surroundings.
[FIG. 2] FIG. 2 is a sectional view showing an overview of the configuration of a rotation transmission device according to the embodiment.
[FIG. 3] FIG. 3 is an exploded perspective view of the rotation transmission device according to the embodiment.
[FIG. 4] FIG. 4 is an exploded perspective view of an intermediate member according to the embodiment.
[FIG. 5] FIG. 5 is a perspective view showing the external appearance of an input member and a first cam portion according to the embodiment.
[FIG. 6] FIG. 6 is a first partial sectional view of the rotation transmission device according to the embodiment.
[FIG. 7] FIG. 7 is a second partial sectional view of the rotation transmission device according to the embodiment.

### MODES FOR CARRYING OUT THE INVENTION

An embodiment will be described in detail below with reference to the drawings. The embodiment described below illustrates a comprehensive or specific example. Numerical values, shapes, materials, constituent elements, arrangement positions and connection forms of constituent elements, and the order of manufacturing steps described in the following embodiment are merely examples and are not intended to limit the present invention. Among constituent elements in the following embodiment, constituent elements not described in the independent claim indicating the highest-level concept are described as optional constituent elements.

The drawings are schematic drawings in which emphasis, omission, or adjustment of proportions are made as appropriate in order to illustrate the present invention, and the illustrations in the drawings may differ from actual shapes, positional relationships, and proportions. In the following embodiments and claims, expressions indicating relative directions or orientations, such as "parallel" and "orthogonal," may be used. However, these expressions include cases where the directions or orientations are not strictly such directions or orientations. For example, "two directions are parallel" means not only that the two directions are completely parallel, but also that they are substantially parallel, i.e., includes differences of, for example, about several percent.

### (Embodiment)

### [1. Overview of Configuration of Steering System]

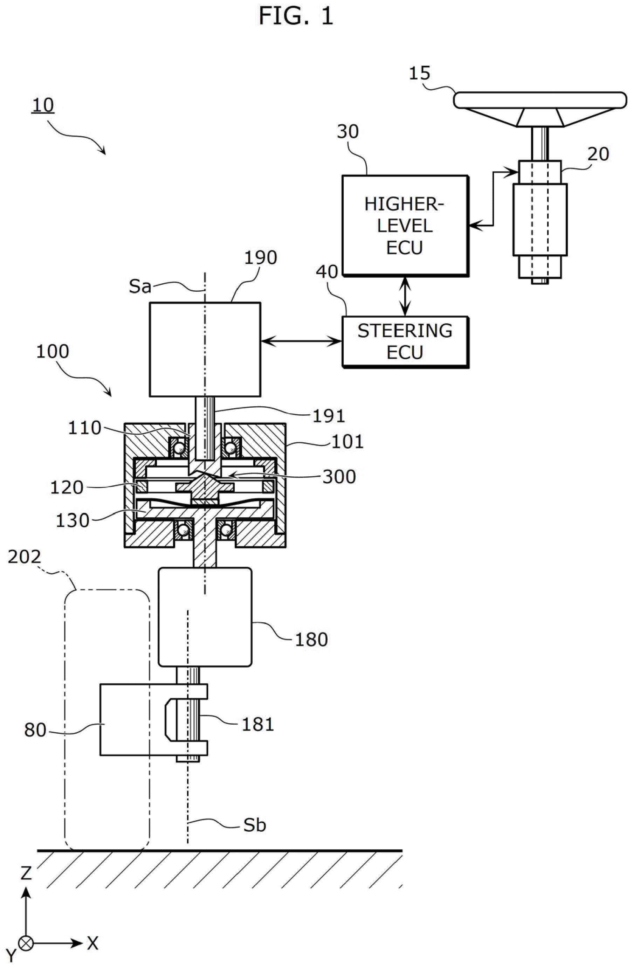

First, the overall configuration of a steering system 10 according to the present embodiment will be described with reference to FIG. 1. FIG. 1 is a schematic diagram showing an overview of the configuration of the steering system 10 according to the embodiment and its surroundings. In FIG. 1, a rotation transmission device 100 is shown in cross section in an XZ plane passing through the central axis Sa of an input member 110, and an approximate outer shape of a wheel 202 is shown by a long dashed double-short dashed line. For simplicity of illustration of the steering system 10, an axle suspension mechanism (shock absorber, arms, etc.) supporting the wheel 202 is not shown in FIG. 1.

The steering system 10 is a system that steers a vehicle equipped with the steering system 10 by steering the wheel 202 in accordance with an operation of a steering wheel 15 operated by a driver. The steering system 10 includes the rotation transmission device 100 according to the present embodiment.

The steering system 10 includes a motor 190 that generates a driving force for steering the wheel 202, the rotation transmission device 100 that transmits the driving force from the motor 190 to the wheel 202 and operates to cut off or suppress reverse input from the wheel 202, and a speed reducer 180.

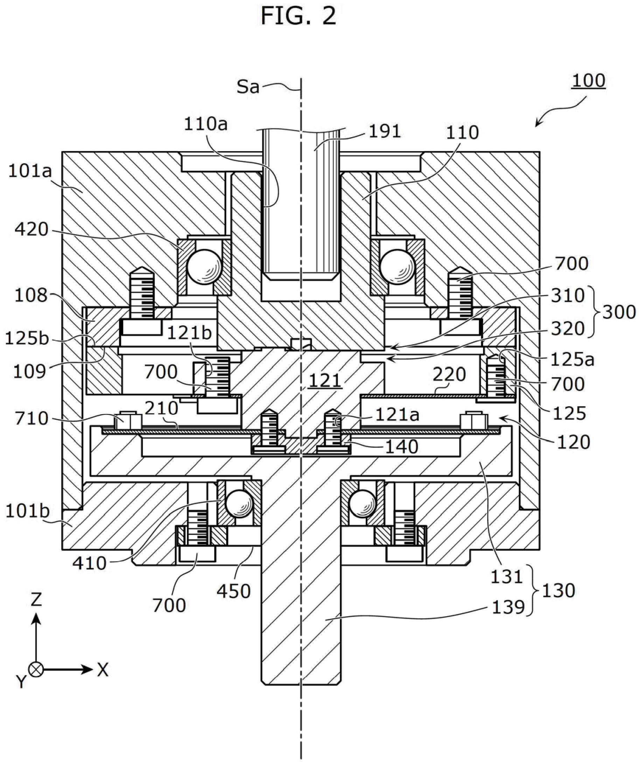

The rotation transmission device 100 includes the input member 110, an intermediate member 120, an output member 130, a cam mechanism 300, and a housing 101. The input member 110 rotates about the central axis Sa upon receiving input from the motor 190 serving as a driving source. Torque generated by rotation of the input member 110 is transmitted to the output member 130 via the cam mechanism 300 and the intermediate member 120, whereby the output member 130 rotates. In the present embodiment, the input member 110, the intermediate member 120, and the output member 130 are arranged to rotate about the central axis Sa. That is, the input member 110, the intermediate member 120, and the output member 130 are arranged coaxially. In the present embodiment, the central axis Sa is an imaginary axis parallel to a Z-axis direction. In FIGS. 1 to 7, the Z-axis direction is illustrated as coinciding with an up-down direction, but the Z-axis direction does not need to coincide with the up-down direction. The rotation transmission device 100 will be described in detail later with reference to FIGS. 2 to 7.

Torque generated by rotation of the output member 130 of the rotation transmission device 100 is input to the speed reducer 180 and is output from the speed reducer 180 as rotation at a lower rotational speed and with a larger torque. The speed reducer 180 is connected to a support shaft 181 that supports the wheel 202, and the support shaft 181 rotates about the central axis Sb by torque output from the speed reducer 180. As a result, the wheel 202 is steered.

More specifically, in the present embodiment, the wheel 202 is rotationally driven by a traction motor (not shown) attached to a hub carrier 80 located at a central portion, whereby the vehicle equipped with the steering system 10 travels. The hub carrier 80 is fixed to the support shaft 181, and the wheel 202 receives a rotational driving force from the speed reducer 180 via the hub carrier 80 and the support shaft 181. As a result, the wheel 202 is steered.

In FIG. 1, the central axis Sb of the support shaft 181 supporting the wheel 202 is illustrated as being parallel to the up-down direction (Z-axis direction), but the central axis Sb does not need to be parallel to the up-down direction. For example, in order to increase the contact area between the wheel 202 and the road surface when the vehicle passes through a corner, the central axis Sb may be inclined inward (such that it tilts outward as it becomes closer to the road surface). That is, the camber angle of the wheel 202 may be negative. In this case, the central axis Sa of the input member 110 may be parallel to the central axis Sb of the support shaft 181 (including a case where they are on the same straight line), and may be parallel to the up-down direction. When the central axis Sb and the central axis Sa are not parallel, a universal joint may be disposed between the speed reducer 180 and the support shaft 181. Although not shown in FIG. 1, for example, when viewed in an X-axis direction, the central axis Sb of the support shaft 181 may be inclined rearward as it becomes farther from the road surface (such that it tilts toward the positive Y-axis direction as it extends toward the positive Z-axis direction). That is, the caster angle of the wheel 202 may be greater than 0°.

The steering system 10 configured as described above operates under control from a higher-level ECU (Electronic Control Unit) 30. Specifically, for example, when the steering wheel 15 is rotated by a driver's operation, the rotation angle and angular velocity of a shaft connected to the steering wheel 15 are detected by a steering angle sensor 20. The detection results from the steering angle sensor 20 are transmitted to the higher-level ECU 30, and the higher-level ECU 30 transmits a control signal based on the detection results to a steering ECU 40. The steering ECU 40 controls the motor 190 in accordance with the received control signal. As a result, the wheel 202 rotates to change the steered angle. Such a system is called, for example, an SBW (Steer By Wire) system. Various types of information such as detection results from a vehicle speed sensor are input to the higher-level ECU 30, but details of processing by the higher-level ECU 30 will be omitted.

Among the four wheels 202 of the vehicle, the right front wheel 202 and its surrounding configuration are shown in FIG. 1. In the present embodiment, at least the left front wheel among the other three wheels 202 is also provided with a motor 190, a rotation transmission device 100, a traction motor, and the like. That is, in the present embodiment, each of at least two wheels 202 has a driving force independent of the others and is steerable independently of the others.

As described above, in the steering system 10, each of the right and left front wheels (wheels 202) is steered by the driving force of the motor 190 operated by electric power. Therefore, compared to a conventional structure in which right and left front wheels are synchronously steered using a link mechanism, advantages such as effective use of an in-vehicle space, improved freedom of the steered angles of the front wheels, and improved vehicle motion performance due to independent steering of the right and left front wheels are obtained.

However, in a steering system in which right and left wheels are independently steered using motors, for example, how to maintain the steered angles of the front wheels while the vehicle is stopped becomes an issue. This is remarkable when the front wheels have a kingpin inclination angle other than 0° and a scrub radius other than 0 mm, and/or when the front wheels have a caster angle other than 0° and a trail other than 0 mm. Even during traveling of the vehicle, how to maintain the steered angles of the front wheels against torque generated when the front wheels are lifted from the road surface (lifting torque) or against vibrations received by the steering system becomes an issue. In order to address these issues, for example, it is conceivable to use a device operated by electric power (such as an electromagnetic brake) for maintaining the steered angles of the front wheels. However, in this case, since such a device continues to consume electric power even while the vehicle is stopped, a reduction in capacity of an on-board battery becomes an issue.

Therefore, the rotation transmission device 100 according to the present embodiment has a configuration capable of mechanically suppressing a change in steered angle during a period in which there is no torque input from the motor 190 (no forward input), and capable of suppressing a reduction in torque transmission efficiency. Hereinafter, the rotation transmission device 100 according to the present embodiment will be described in more detail.

### [2. Details of Rotation Transmission Device]

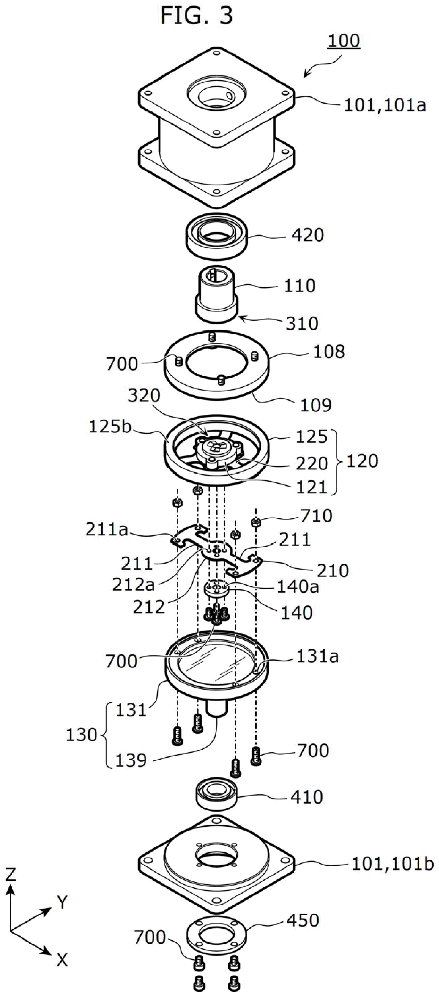

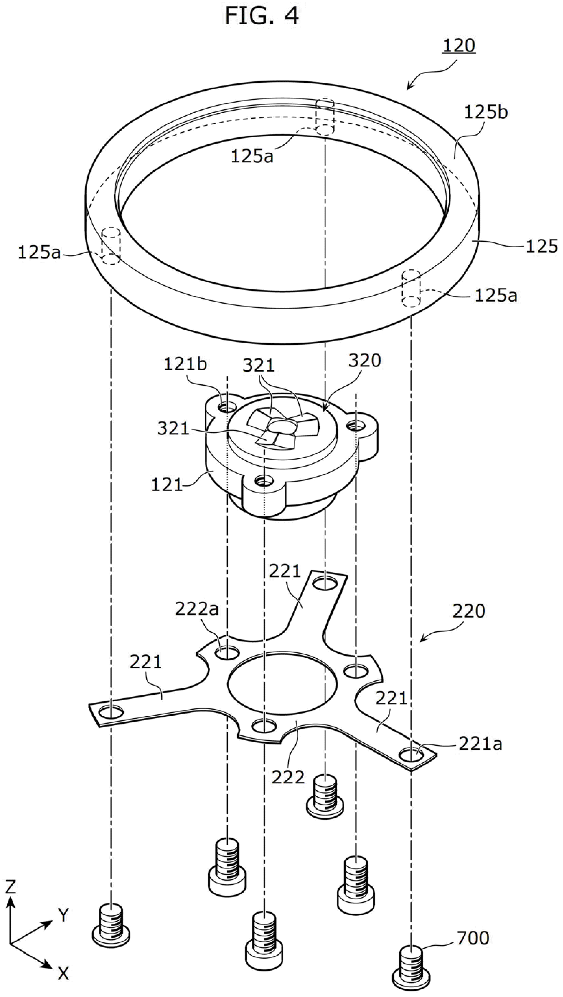

FIG. 2 is a sectional view showing an overview of the configuration of the rotation transmission device 100 according to the embodiment. FIG. 3 is an exploded perspective view of the rotation transmission device 100 according to the embodiment. FIG. 4 is an exploded perspective view of the intermediate member 120 according to the embodiment. Bolts used for fixing various members are shown in FIGS. 2 to 4. These bolts include bolts different in size and shape, but for simplicity of description, each of these bolts is denoted as "bolt 700."

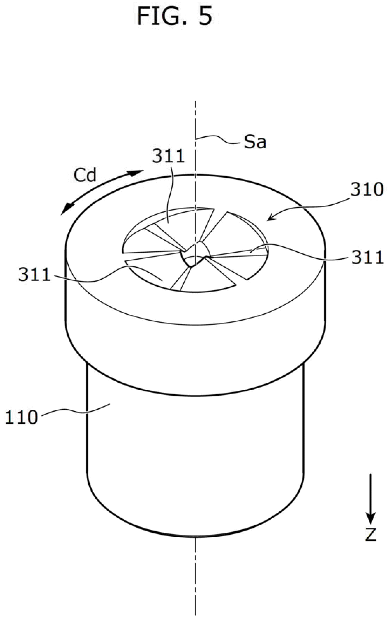

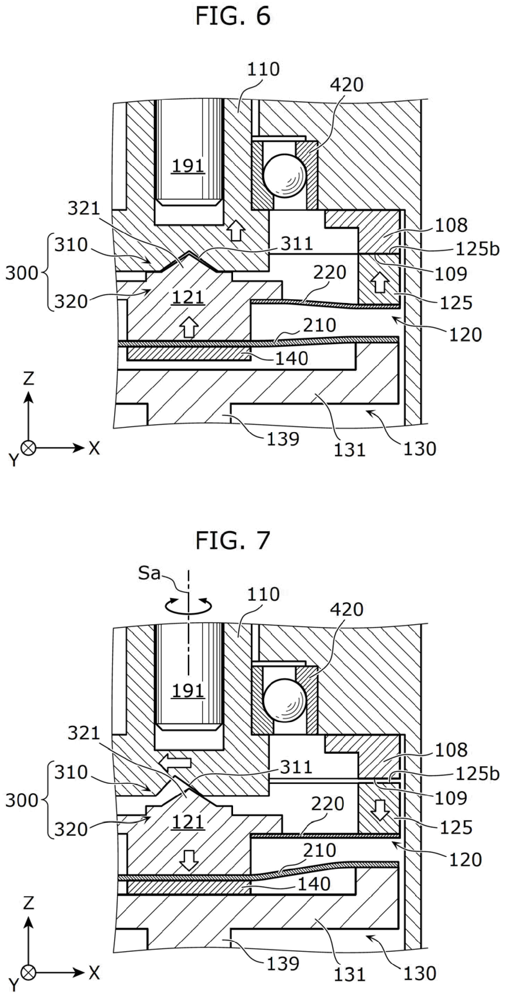

FIG. 5 is a perspective view showing the external appearance of the input member 110 and a first cam portion 310 according to the embodiment. FIG. 6 is a first partial sectional view of the rotation transmission device 100 according to the embodiment. FIG. 7 is a second partial sectional view of the rotation transmission device 100 according to the embodiment. FIG. 6 schematically shows a cross section of the intermediate member 120 and surrounding members in a state where no torque is input from the motor 190 to the rotation transmission device 100 (stopped state). FIG. 7 schematically shows a cross section of the intermediate member 120 and surrounding members in a state where torque is input from the motor 190 to the rotation transmission device 100 (operating state). The bolts 700 and the like for fixing the members are not shown in FIGS. 6 and 7.

As shown in FIGS. 1 to 5, the rotation transmission device 100 according to the present embodiment includes: the housing 101 fixed to the vehicle; the intermediate member 120 and the cam mechanism 300 housed in the housing 101; the input member 110 and the output member 130 rotatably held by the housing 101; and a first biasing member 210 connecting the intermediate member 120 and the output member 130.

The housing 101 includes a housing main body 101a that houses the intermediate member 120 and the like, and a housing lid 101b fixed to an opening of the housing main body 101a on the side from which an output shaft 139 protrudes. The housing lid 101b is fixed to the housing main body 101a using bolts or the like, not shown.

The input member 110 is a member rotatably supported by an input bearing 420 disposed in the housing 101. In the present embodiment, the input bearing 420 is an angular contact ball bearing capable of supporting a radial load and an axial load at the same time. The input member 110 has a fixing hole 110a, and a motor shaft 191 that is a shaft of the motor 190 is inserted into and fixed in the fixing hole 110a. Accordingly, the input member 110 rotates about the central axis Sa upon receiving torque input from the motor 190.

As shown in FIGS. 3 and 4, the intermediate member 120 includes an intermediate main body 121 disposed at a position through which the central axis Sa passes, a rotating friction portion 125 that is annular when viewed in an axial direction, and a second biasing member 220 connecting the intermediate main body 121 and the rotating friction portion 125. The "axial direction" is the direction of the central axis Sa and, in the present embodiment, is a direction parallel to the Z-axis direction. The Z-axis direction is an example of the first direction. That is, the central axis Sa is an imaginary axis extending in the first direction. The rotational direction about the central axis Sa is hereinafter referred to as "circumferential direction," and the direction of a straight line orthogonal to the central axis Sa and passing through the central axis Sa is hereinafter referred to as "radial direction." The radial direction is an example of the second direction.

In the intermediate member 120, the second biasing member 220 biases the rotating friction portion 125 toward a fixed friction surface 109 of the housing 101. In the present embodiment, the housing 101 includes, at a position facing the rotating friction portion 125 in the Z-axis direction, a fixed friction portion 108 that is annular when viewed in the axial direction. The surface of the fixed friction portion 108 on the negative Z-axis side functions as the fixed friction surface 109.

More specifically, in the intermediate member 120, the intermediate main body 121 is disposed at the center of the annular rotating friction portion 125, and the second biasing member 220 is disposed so as to connect the intermediate main body 121 and the rotating friction portion 125. In the present embodiment, a leaf spring, which is an example of the plate-shaped elastic member, is used as the second biasing member 220. The second biasing member 220 is disposed with its thickness direction oriented in the Z-axis direction.

More specifically, as shown in FIG. 4, the second biasing member 220 includes a second fixing portion 222 fixed to the intermediate main body 121, and a plurality of second connection portions 221 extending radially outward from the second fixing portion 222. In the present embodiment, the second biasing member 220 includes three second connection portions 221 arranged at equal intervals in a circumferential direction Cd (see FIG. 5). The second fixing portion 222 is fixed to the intermediate main body 121 by bolts 700 each passing through a corresponding one of three through holes 222a provided in the second fixing portion 222 and screwed into a corresponding one of threaded holes 121b of the intermediate main body 121. Furthermore, each of the three second connection portions 221 is fixed to the rotating friction portion 125 by a bolt 700 passing through a through hole 221a provided in the second connection portion 221 and screwed into a corresponding one of threaded holes 125a of the rotating friction portion 125. The intermediate main body 121 and the rotating friction portion 125 are thus connected by the second biasing member 220. When the rotation transmission device 100 is in the stopped state, the second biasing member 220 biases the rotating friction portion 125 toward the fixed friction surface 109. That is, the rotating friction portion 125 is pressed against the fixed friction surface 109.

The output member 130 is a member rotatably supported by an output bearing 410 disposed in the housing 101. In the present embodiment, like the input bearing 420, the output bearing 410 is an angular contact ball bearing. As shown in FIGS. 2 and 3, the output member 130 includes a disk-shaped output body 131 and the output shaft 139 protruding from the output body 131 in the negative Z-axis direction. In the present embodiment, the output shaft 139 is formed integrally with the output body 131. However, the output shaft 139 may be a separate member from the output body 131. When the output shaft 139 is a separate member from the output body 131, examples of means for joining the output shaft 139 and the output body 131 include welding, press-fitting, fastening with bolts and nuts, or combinations thereof. In the present embodiment, as shown in FIGS. 2 and 3, the output bearing 410 is fixed between a bearing holding member 450 and the output body 131 by the bearing holding member 450 being fastened to the housing lid 101b with four bolts 700.

The output body 131 is a portion that receives torque generated by rotation of the intermediate member 120. Specifically, the intermediate member 120 and the output body 131 are connected by the first biasing member 210. The output body 131 receives, via the first biasing member 210, torque generated by rotation of the intermediate member 120, whereby the output body 131 and the output shaft 139 (that is, the output member 130) rotate about the central axis Sa. In the present embodiment, a leaf spring, which is an example of the plate-shaped elastic member, is used as the first biasing member 210. The first biasing member 210 is disposed with its thickness direction oriented in the Z-axis direction.

More specifically, as shown in FIG. 3, the first biasing member 210 includes a first fixing portion 212 fixed to the intermediate main body 121, and a plurality of first connection portions 211 extending radially outward from the first fixing portion 212. In the present embodiment, the first biasing member 210 includes two first connection portions 211 extending in opposite directions from the first fixing portion 212. The first fixing portion 212 is fixed to the intermediate main body 121 by bolts 700 passing through a spacer 140 (see FIGS. 2 and 3). Specifically, bolts 700 passing through through holes 140a provided in the spacer 140 and through holes 212a provided in the first fixing portion 212 are screwed into threaded holes 121a (see FIG. 2) of the intermediate main body 121. The first fixing portion 212 is thus fixed to the intermediate main body 121. In the present embodiment, there are four pairs of through holes 140a and 212a. That is, in the present embodiment, the spacer 140 and the first fixing portion 212 are fastened together to the intermediate main body 121 by four bolts 700. The spacer 140 and the first fixing portion 212 are thus fixed to the intermediate main body 121. Further, bolts 700 passing through through holes 131a of the output body 131 are inserted into two through holes 211a provided in each of the two first connection portions 211 and are screwed into nuts 710 (see FIG. 3). Each of the two first connection portions 211 is thus fixed to the output body 131. As a result, the output member 130 and the intermediate member 120 are connected by the first biasing member 210.

The first biasing member 210 arranged as described above can bias the intermediate member 120 toward the input member 110 regardless of whether the rotation transmission device 100 is in the stopped state or in the operating state.

In the rotation transmission device 100 configured as described above, the cam mechanism 300 is disposed between the input member 110 and the intermediate member 120. The cam mechanism 300 is a mechanism that moves the intermediate main body 121 in a direction toward the output member 130 (the positive Z-axis direction) while maintaining a state in which rotation of the input member 110 is transmitted to the intermediate main body 121. When the intermediate main body 121 is moved in the positive Z-axis direction by the cam mechanism 300, the rotating friction portion 125 connected to the intermediate main body 121 by the second biasing member 220 moves in a direction away from the fixed friction surface 109. That is, the frictional force between the rotating friction portion 125 and the fixed friction surface 109 can be reduced, whereby the intermediate member 120 can efficiently rotate by torque received from the input member 110.

Specifically, the cam mechanism 300 according to the present embodiment includes the first cam portion 310 and a second cam portion 320. The first cam portion 310 is provided at an end of the input member 110 on the negative Z-axis side. The second cam portion 320 is provided at an end of the intermediate main body 121 on the positive Z-axis side. In the present embodiment, since the first cam portion 310 is formed integrally with the input member 110, it may also be described that a part of the input member 110 is the first cam portion 310. Similarly, since the second cam portion 320 is formed integrally with the intermediate main body 121, it may also be described that a part of the intermediate main body 121 is the second cam portion 320. That is, the cam mechanism 300 may also be described as being constituted by a part of the input member 110 and a part of the intermediate main body 121.

As shown in FIG. 5, the first cam portion 310 includes three recessed cams 311, each recessed in the positive Z-axis direction. As shown in FIG. 4, the second cam portion 320 includes three protruding cams 321, each protruding in the positive Z-axis direction. The three recessed cams 311 correspond one-to-one with the three protruding cams 321. Each recessed cam 311 is a recess having a substantially triangular cross section along the circumferential direction Cd (see FIG. 5). Each protruding cam 321 is a protrusion having a substantially triangular cross section along the circumferential direction Cd. When a protruding cam 321 is inserted into a recessed cam 311 having such a shape, and the recessed cam 311 moves relative to the protruding cam 321 in the circumferential direction Cd, the inner surface of the recessed cam 311 and the outer surface of the protruding cam 321 come into contact with and slide against each other. As a result, a force component directed so as to separate the protruding cam 321 from the recessed cam 311 acts on the protruding cam 321.

In the cam mechanism 300 configured as described above, when the rotation transmission device 100 is in the stopped state, the protruding cams 321 are respectively inserted into the recessed cams 311, as shown in FIG. 6. Specifically, each protruding cam 321 receives, via the intermediate main body 121, a biasing force from the first biasing member 210 in a direction toward the input member 110. In this state, since electric power for outputting torque is not supplied to the motor 190, the input member 110 to which the motor shaft 191 is fixed is substantially rotatable about the central axis Sa. Therefore, the input member 110 rotates such that the inner surfaces of the recessed cams 311 follow the outer surfaces of the protruding cams 321. For example, the input member 110 rotates from the rotational position shown in FIG. 7 to the rotational position shown in FIG. 6. In FIGS. 6 and 7, the recessed cam 311 and the protruding cam 321 are illustrated in a simplified and schematic manner in order to clearly show the structural relationship between the recessed cam 311 and the protruding cam 321.

When the cam mechanism 300 is in the state shown in FIG. 6, the intermediate main body 121 receives a biasing force from the first biasing member 210 and presses the input member 110 in the positive Z-axis direction. In the present embodiment, as described above, the input bearing 420 that rotatably supports the input member 110 is an angular contact ball bearing. As shown in FIGS. 6 and 7, the input bearing 420 is disposed in an orientation such that it can support a load in the positive Z-axis direction. That is, in the present embodiment, a preload can be applied to the input bearing 420, which is an angular contact ball bearing, by the biasing force of the first biasing member 210. Rattling or the like of the input member 110 is thus suppressed. In this state, the rotating friction portion 125 connected to the intermediate main body 121 via the second biasing member 220 is pressed against the fixed friction surface 109 by the biasing force of the second biasing member 220.

More specifically, in the present embodiment, the spring constant of the first biasing member 210 is greater than the spring constant of the second biasing member 220. Therefore, when the intermediate main body 121 moves, for example, from the position shown in FIG. 7 to the position shown in FIG. 6 due to the biasing force of the first biasing member 210, the intermediate main body 121 can move to the position shown in FIG. 6 while deforming the second biasing member 220 after the rotating friction portion 125 comes into contact with the fixed friction surface 109. As a result, the rotating friction surface 125b, which is the surface of the rotating friction portion 125 on the positive Z-axis side, is pressed against the fixed friction surface 109. That is, a state in which the intermediate main body 121 presses the input member 110 in the positive Z-axis direction and a state in which the rotating friction portion 125 is pressed against the fixed friction surface 109 can be achieved simultaneously. In this case, the frictional force between the rotating friction portion 125 and the fixed friction surface 109 is maintained at a relatively high level, and as a result, rotation of the intermediate member 120 about the central axis Sa is suppressed. Accordingly, even if torque input from the wheel 202 (reverse input) is applied to the output shaft 139 of the output member 130, rotation of the intermediate member 120 due to the reverse input is suppressed. That is, a change in the steered angle of the wheel 202 is suppressed.

When the rotation transmission device 100 changes from the stopped state to the operating state, that is, when torque is input from the motor 190 to the input member 110, the input member 110 rotates, for example, clockwise as viewed from the positive Z-axis direction, as shown in FIG. 7. In this case, the recessed cams 311 rotate clockwise together with the input member 110. As a result, as shown in FIG. 7, the inner surfaces of the recessed cams 311 and the outer surfaces of the protruding cams 321 slide against each other, whereby the protruding cams 321 receive a force in the negative Z-axis direction from the recessed cams 311. Consequently, the intermediate main body 121 moves in a direction away from the input member 110 against the biasing force of the first biasing member 210. With this movement, the biasing force applied from the second biasing member 220 to the rotating friction portion 125 connected to the intermediate main body 121 via the second biasing member 220 is weakened. As a result, the frictional force between the rotating friction portion 125 and the fixed friction surface 109 is reduced. For example, as shown in FIG. 7, the rotating friction portion 125 and the fixed friction surface 109 are separated from each other. As a result, the frictional force becomes zero. Accordingly, the intermediate member 120 does not receive frictional resistance from the fixed friction surface 109 and is rotatable about the central axis Sa.

In a state in which the frictional force between the rotating friction portion 125 and the fixed friction surface 109 is reduced as described above, the recessed cams 311 and the protruding cams 321 are maintained in an engaged state in the rotational direction of the input member 110 (that is, the circumferential direction Cd). More specifically, in the present embodiment, the spacer 140 disposed on the negative Z-axis side of the intermediate main body 121 contacts the output member 130, thereby restricting movement of the intermediate main body 121 in the negative Z-axis direction. As a result, the maximum amount of deformation of the first biasing member 210 can be suppressed, and movement of the protruding cams 321 out of the recessed cams 311, that is, disengagement of the protruding cams 321 from the recessed cams 311, is restricted. As a result, as shown in FIG. 7, the first cam portion 310 and the second cam portion 320 are maintained in an engaged state in the circumferential direction Cd. Therefore, torque generated by rotation of the input member 110 is transmitted to the intermediate member 120 via the cam mechanism 300. At this time, since the frictional force between the rotating friction portion 125 and the fixed friction surface 109 is reduced, the intermediate member 120 can start rotating with a relatively small input torque. Thereafter, as the rotating friction portion 125 and the fixed friction surface 109 are separated from each other, the frictional force becomes zero, and as a result, the intermediate member 120 can efficiently rotate by torque input from the input member 110.

The output member 130 connected to the intermediate member 120 via the first biasing member 210 rotates by torque generated by rotation of the intermediate member 120. Torque generated by rotation of the output shaft 139 of the output member 130 is converted by the speed reducer 180 into a larger torque and transmitted to the support shaft 181. As a result, the support shaft 181 rotates about the central axis Sb, whereby the wheel 202 is steered.

When the rotation transmission device 100 is in the operating state, the input member 110 applies a force in the negative Z-axis direction to the intermediate main body 121 and receives a reaction force from the first biasing member 210 via the intermediate main body 121. Therefore, even when the rotation transmission device 100 is in the operating state, the first biasing member 210 can apply a preload to the input bearing 420, which is an angular contact ball bearing. As a result, the input member 110 can rotate more stably.

In the rotation transmission device 100 configured as described above, the input member 110, the intermediate main body 121, the rotating friction portion 125, the spacer 140, the output member 130, and the housing 101 are formed of a metal such as iron or an aluminum alloy. The rotating friction portion 125 and the fixed friction portion 108 that forms the fixed friction surface 109 are formed of, for example, a material used for brake linings, in order to increase the frictional force generated when they come into contact with each other. In the present embodiment, the first biasing member 210 and the second biasing member 220, each of which is a leaf spring, are formed of, for example, carbon tool steel such as SK85 specified in Japanese Industrial Standards (JIS) G4401.

The configuration of the cam mechanism 300 according to the present embodiment can be described, for example, as follows. The cam mechanism 300 includes the first cam portion 310 disposed at an end of the input member 110 on one side in the Z-axis direction, and the second cam portion 320 disposed at an end of the intermediate main body 121 on the other side in the Z-axis direction. The first cam portion 310 and the second cam portion 320 have shapes such that, when the input member 110 rotates, the intermediate main body 121 is moved in a direction toward the output member 130, and such that engagement in the rotational direction of the input member 110 can be maintained in a state in which the intermediate main body 121 is closest to the output member 130.

### [3. Summary of Embodiment]

The technical features of the rotation transmission device 100 according to the above embodiment are described, for example, as follows in (1) to (5) below.
(1) The rotation transmission device 100 includes the input member 110, the intermediate member 120, the output member 130, the first biasing member 210, the cam mechanism 300, and the housing 101. The input member 110 rotates about the central axis Sa extending in the Z-axis direction due to torque input from a driving source (the motor 190 in the embodiment). The intermediate member 120 is disposed coaxially with the input member 110 on one side of the input member 110 in the Z-axis direction. The output member 130 is disposed coaxially with the input member 110 and the intermediate member 120 on one side of the intermediate member 120 in the Z-axis direction. The first biasing member 210 connects the intermediate member 120 and the output member 130 and biases the intermediate member 120 toward the input member 110. The cam mechanism 300 is disposed between the input member 110 and the intermediate member 120 and transmits rotation of the input member 110 to the intermediate member 120. The housing 101 houses the intermediate member 120 and the cam mechanism 300, rotatably holds the input member 110 and the output member 130, and includes the fixed friction surface 109. The intermediate member 120 includes the intermediate main body 121, the rotating friction portion 125, and the second biasing member 220. The intermediate main body 121 is disposed at a position through which the central axis Sa passes, and the first biasing member 210 is fixed to the intermediate main body 121. The rotating friction portion 125 is disposed at a position facing the fixed friction surface 109 in the Z-axis direction. The second biasing member 220 connects the intermediate main body 121 and the rotating friction portion 125 and biases the rotating friction portion 125 toward the fixed friction surface 109. The spring constant of the first biasing member 210 is greater than the spring constant of the second biasing member 220. When the input member 110 rotates, the cam mechanism 300 moves the intermediate main body 121 in a direction toward the output member 130 while maintaining a state in which rotation of the input member 110 is transmitted to the intermediate main body 121, so as to move the rotating friction portion 125 in a direction away from the fixed friction surface 109 via the second biasing member 220. In the embodiment, one side in the Z-axis direction is the negative Z-axis direction, and the other side in the Z-axis direction is the positive Z-axis direction. This also applies to the following description.

In the rotation transmission device 100 according to (1), when the input member 110 rotates, the cam mechanism 300 can move the intermediate main body 121 in a direction toward the output member 130 against the biasing force of the first biasing member 210. Therefore, the frictional force between the rotating friction portion 125 connected to the intermediate main body 121 via the second biasing member 220 and the fixed friction surface 109 is reduced. As a result, rotation of the input member 110 is efficiently transmitted to the output member 130 via the intermediate main body 121 and the first biasing member 210. In this series of operations, the intermediate main body 121 moves in the direction of the central axis Sa (the Z-axis direction) while being supported by the first biasing member 210. Therefore, unlike a case where the intermediate main body 121 slides relative to the output member 130, it is possible to switch between contact and separation between the rotating friction portion 125 and the fixed friction surface 109 without generating frictional force between the intermediate main body 121 and the output member 130. As a result, a reduction in torque transmission efficiency is suppressed.

Further, the rotating friction portion 125 is connected to the intermediate main body 121 via the second biasing member 220. Accordingly, the position of the rotating friction portion 125 relative to the intermediate main body 121 in the Z-axis direction is variable (see FIGS. 6 and 7). More specifically, the spring constant of the first biasing member 210 is greater than the spring constant of the second biasing member 220. Therefore, a state in which the intermediate main body 121 presses the input member 110 in the positive Z-axis direction due to the biasing force of the first biasing member 210, and a state in which the rotating friction portion 125 is pressed against the fixed friction surface 109, can be easily achieved simultaneously. That is, by the input member 110 receiving the biasing force of the first biasing member 210 via the intermediate main body 121, rattling of the input member 110 is suppressed, and input of rotational force (torque) transmitted from the output member 130 to the input member 110 (reverse input) can be cut off by the frictional force between the rotating friction portion 125 and the fixed friction surface 109.

(2) The rotation transmission device 100 according to (1) further includes an angular contact ball bearing (input bearing 420) disposed between the input member 110 and the housing 101 on the other side of the input member 110 in the Z-axis direction, the angular contact ball bearing supporting the input member 110 such that the input member 110 is rotatable and immovable in the Z-axis direction relative to the housing 101.

In the rotation transmission device 100 according to (2), the input bearing 420, which is an angular contact ball bearing, can rotatably support the input member 110 in a state in which a preload due to the biasing force of the first biasing member 210 is applied. Accordingly, for example, rattling of the input member 110 can be more reliably suppressed while allowing the input member 110 to rotate efficiently.

(3) In the rotation transmission device 100 according to (1) or (2), the first biasing member 210 is a plate-shaped elastic member that connects the intermediate main body 121 and the output member 130 in a second direction (radial direction) orthogonal to the Z-axis direction and that has its thickness direction oriented in the Z-axis direction. In the embodiment, the first biasing member 210 is a leaf spring.

In the rotation transmission device 100 according to (3), the first biasing member 210 can be implemented by a flat plate-shaped member. Therefore, for example, an increase in size in the Z-axis direction due to the first biasing member 210 is suppressed.

(4) In the rotation transmission device 100 according to any one of (1) to (3), the second biasing member 220 is a plate-shaped elastic member that connects the intermediate main body 121 and the rotating friction portion 125 in a second direction orthogonal to the Z-axis direction and that has its thickness direction oriented in the Z-axis direction. In the embodiment, the second biasing member 220 is a leaf spring.

In the rotation transmission device 100 according to (4), the second biasing member 220 can be implemented by a flat plate-shaped member. Therefore, for example, an increase in size in the Z-axis direction due to the second biasing member 220 is suppressed.

(5) The rotation transmission device 100 according to any one of (1) to (4) further includes the spacer 140 disposed between the intermediate main body 121 and the output member 130. The intermediate main body 121 presses against the output member 130 in the Z-axis direction via the spacer 140, and movement of the intermediate main body 121 in a direction toward the output member 130 is restricted.

In the rotation transmission device 100 according to (5), movement of the intermediate main body 121 in a direction toward the output member 130 is restricted. Therefore, for example, the maximum amount of deformation of the first biasing member 210 can be suppressed. As a result, occurrence of failures such as damage or deterioration of the first biasing member 210 is suppressed. Further, the maximum amount of movement of the intermediate main body 121 and the maximum amount of deformation of the first biasing member 210 can be adjusted, for example, by changing the thickness of the spacer 140. That is, it is easy to adjust the maximum amount of deformation and the like.

### (Other Embodiments)

The rotation transmission device according to the present invention has been described above based on the embodiment. However, the present invention is not limited to the above embodiment and modifications. Various modifications of the above embodiment that may be conceived by those skilled in the art, and forms constructed by combining two or more of the components described above, without departing from the gist of the present invention, are also included within the scope of the present invention.

The shapes of the first biasing member 210 and the second biasing member 220 are not limited to the shapes shown in FIGS. 3 and 4. For example, the number of first connection portions 211 included in the first biasing member 210 may be one, or three or more. The number of second connection portions 221 included in the second biasing member 220 may be two or less, or four or more. However, for example, from the viewpoint that the first biasing member 210 applies a biasing force to the intermediate main body 121 in a well-balanced manner, the first biasing member 210 preferably includes a plurality of first connection portions 211 arranged at equal intervals in the circumferential direction Cd. For example, from the viewpoint that the second biasing member 220 applies a biasing force to the rotating friction portion 125 in a well-balanced manner, the second biasing member 220 preferably includes a plurality of second connection portions 221 arranged at equal intervals in the circumferential direction Cd.

The first biasing member 210 and the second biasing member 220 may be implemented by one or more elastic members other than leaf springs. For example, the first biasing member 210 may be implemented by arranging, between the intermediate main body 121 and the output member 130, one or more compression springs that elastically deform in the Z-axis direction, and connecting the intermediate main body 121 and the output member 130 by the one or more compression springs. Similarly, the second biasing member 220 may be implemented by an elastic member other than a leaf spring. For example, the intermediate main body 121 and the rotating friction portion 125 may each be provided with a portion (opposing portion) that faces the other in the Z-axis direction, and one or more compression springs that elastically deform in the Z-axis direction may be disposed between these opposing portions. In any of these cases, it is possible to switch between contact and separation between the rotating friction portion 125 and the fixed friction surface 109 without generating frictional force between the intermediate main body 121 and the output member 130. Furthermore, a state in which the intermediate main body 121 presses the input member 110 in the positive Z-axis direction and a state in which the rotating friction portion 125 is pressed against the fixed friction surface 109 can be easily achieved simultaneously.

The number of recessed cams 311 provided in the first cam portion 310 and the number of protruding cams 321 provided in the second cam portion 320 are not particularly limited. The first cam portion 310 may include at least one recessed cam 311, and the second cam portion 320 may include at least one protruding cam 321. However, from the viewpoint of transmitting torque in a well-balanced manner in the circumferential direction Cd, it is preferable that the first cam portion 310 include N recessed cams 311 (where N is an integer of two or more) arranged at equal intervals in the circumferential direction Cd, and that the second cam portion 320 include N protruding cams 321 arranged at equal intervals in the circumferential direction Cd.

Crown gears may be used as the first cam portion 310 and the second cam portion 320. In this case, a recessed portion between two adjacent teeth in the circumferential direction Cd in the first cam portion 310 can be described as the recessed cam 311. Each of the teeth arranged at equal intervals in the circumferential direction Cd in the second cam portion 320 can be described as a protruding cam.

The first cam portion 310 does not need to include one or more recessed cams 311, and the second cam portion 320 does not need to include one or more protruding cams 321. The first cam portion 310 may include one or more protruding cams, and the second cam portion 320 may include one or more recessed cams.

The shapes of the protruding cam 321 and the recessed cam 311 are not limited to the shapes shown in FIGS. 4 and 5. The protruding cam 321 and the recessed cam 311 may have any shapes that, when one presses the other in the circumferential direction Cd, generate a force component directed in the pressing direction and a force component directed so as to separate the one and the other in the axial direction.

The motor shaft 191 does not need to directly transmit torque to the input member 110. For example, one or more gears, or a belt and a pulley, may be provided between the motor shaft 191 and the input member 110 such that torque is transmitted from the motor 190 to the input member 110.

The rotation transmission device 100 according to the embodiment may be provided in an apparatus other than the steering system 10. For example, in an apparatus that lifts a target object by winding a wire using output from a motor, the rotation transmission device 100 may be used as a device for cutting off a force by which the target object pulls the wire (reverse input).

The steering system 10 including the rotation transmission device 100 according to the embodiment may be applied to, for example, a vehicle having three wheels or five or more wheels, instead of a four-wheeled vehicle.

In addition, the present invention also includes configurations obtained by combining two or more of the claims as filed, as long as no technical inconsistency arises.

### INDUSTRIAL APPLICABILITY

The rotation transmission device according to the present invention is useful as a rotation transmission device for transmitting input from a motor to a predetermined object and cutting off reverse input from the predetermined object, and can be applied, for example, as a rotation transmission device for vehicles such as automobiles, agricultural machines, or construction machines.

### Description of the Reference Numerals

10: steering system, 15: steering wheel, 20: steering angle sensor, 30: higher-level ECU, 40: steering ECU, 80: hub carrier, 100: rotation transmission device, 101: housing, 101a: housing main body, 101b: housing lid, 108: fixed friction portion, 109: fixed friction surface, 110: input member, 110a: fixing hole, 120: intermediate member, 121: intermediate main body, 121a, 121b, 125a: threaded hole, 125: rotating friction portion, 125b: rotating friction surface, 130: output member, 131: output main body, 131a, 140a, 211a, 212a, 221a, 222a: through hole, 139: output shaft, 140: spacer, 180: speed reducer, 181: support shaft, 190: motor, 191: motor shaft, 202: wheel, 210: first biasing member, 211: first connection portion, 212: first fixing portion, 220: second biasing member, 221: second connection portion, 222: second fixing portion, 300: cam mechanism, 310: first cam portion, 311: recessed cam, 320: second cam portion, 321: protruding cam, 410: output bearing, 420: input bearing, 450: bearing holding member, 700: bolt, 710: nut

## Claims

1. A rotation transmission device comprising:
an input member configured to rotate about a central axis extending in a first direction by torque input from a driving source;
an intermediate member disposed coaxially with the input member on one side of the input member in the first direction;
an output member disposed coaxially with the input member and the intermediate member on one side of the intermediate member in the first direction;
a first biasing member connecting the intermediate member and the output member and configured to bias the intermediate member toward the input member;
a cam mechanism disposed between the input member and the intermediate member and configured to transmit rotation of the input member to the intermediate member; and
a housing that houses the intermediate member and the cam mechanism, rotatably holds the input member and the output member, and includes a fixed friction surface, wherein:
the intermediate member includes
an intermediate main body disposed at a position through which the central axis passes, the first biasing member being fixed to the intermediate main body,
a rotating friction portion disposed at a position facing the fixed friction surface in the first direction, and
a second biasing member connecting the intermediate main body and the rotating friction portion and configured to bias the rotating friction portion toward the fixed friction surface;
a spring constant of the first biasing member is greater than a spring constant of the second biasing member; and
the cam mechanism is configured to,
when the input member rotates, move the intermediate main body in a direction toward the output member while maintaining a state in which rotation of the input member is transmitted to the intermediate main body, so as to move the rotating friction portion in a direction away from the fixed friction surface via the second biasing member.

2. The rotation transmission device according to claim 1, further comprising an angular contact ball bearing disposed between the input member and the housing on the other side of the input member in the first direction, the angular contact ball bearing supporting the input member such that the input member is rotatable and immovable in the first direction relative to the housing.

3. The rotation transmission device according to claim 1 or 2, wherein the first biasing member is a plate-shaped elastic member that connects the intermediate main body and the output member in a second direction orthogonal to the first direction and that has a thickness direction oriented in the first direction.

4. The rotation transmission device according to claim 1 or 2, wherein the second biasing member is a plate-shaped elastic member that connects the intermediate main body and the rotating friction portion in a second direction orthogonal to the first direction and that has a thickness direction oriented in the first direction.

5. The rotation transmission device according to claim 1 or 2, further comprising a spacer disposed between the intermediate main body and the output member, wherein the intermediate main body is configured to press against the output member in the first direction via the spacer, and movement of the intermediate main body in a direction toward the output member is restricted.
